# EUROPEAN PATENT APPLICATION

(11) **EP 4 792 709 A1**
(43) Date of publication of application: **19.08.2026**
(21) Application number: 26158433.8
(22) Date of filing: 13.02.2026
(51) Int. Cl.: A47L 1/02

(54) **WINDOW CLEANING APPARATUS**

(30) Priority: 17.02.2025 KR 20250020226
(71) Applicant: LG Electronics Inc., Yeongdeungpo-gu Seoul 07336 (KR)
(72) Inventor: KANG, Chanyoung, Seoul (KR); PARK, Janghee, Seoul (KR); YOON, Heesang, Seoul (KR); KEE, Hyunshin, Seoul (KR); LEE, Jeongah, Seoul (KR)
(74) Representative: Schott, Jakob Valentin

(57) **Abstract**

A window cleaning apparatus including a main body (100) configured to clean a window and a moving device (1020) configured to move the main body, in which the main body includes a housing (102) forming an exterior, and a cleaning module (170) disposed on one side of the housing and configured to remove foreign substances from the window, and the cleaning module includes a fan (230) configured to generate airflow, a scraper (250) configured to wipe the foreign substances attached to the window, a first sensor (260) configured to detect a distance from the window, and a second sensor (262) configured to detect contamination of the window.

## Description

### BACKGROUND OF THE INVENTION

### 1. Field of the invention

The present disclosure relates to a window cleaning apparatus, and more specifically, to a window cleaning apparatus for cleaning an outer surface of a window.

### 2. Description of the Related Art

Generally, the outer surface of a window installed on an exterior wall surface of a building is difficult to clean. Therefore, when left unattended, the window may easily become contaminated by external dust, air pollution, and the like, which may reduce the light transmittance of the window.

To clean the outer surface of a window, the task may be entrusted to a specialized service provider; however, there is a problem in that costs are incurred on a periodic basis.

Conventional Korean Patent No. KR 10-1654876B1 discloses a device for cleaning a window. However, the device has an inconvenience in that a user should manually clean the window using the device from indoors. In addition, when the device is actually used indoors, there is a difficulty in cleaning the entire outer surface of the window.

Furthermore, conventional Korean Patent No. KR 10-2637716B1 discloses a rail-type window cleaner that cleans a window while moving up and down. However, the disclosed document only discloses a structure that is fixed to a specific window and moves up and down, and thus has a problem in that it may not be possible to properly clean a plurality of windows or windows of various shapes.

### SUMMARY OF THE INVENTION

An object of the present disclosure is to solve the above-described problems and other problems.

An object of the present disclosure is to provide a window cleaning apparatus for cleaning foreign substances attached to an outer surface of a window.

An object of the present disclosure is to provide a window cleaning apparatus capable of cleaning a window while moving in left-right and up-down directions.

An object of the present disclosure is to provide a window cleaning apparatus capable of effectively cleaning a window by providing an optimal cleaning mode.

An object of the present disclosure is to provide a window cleaning apparatus capable of accurately determining the level of contamination on a window.

An object of the present disclosure is to provide a window cleaning apparatus capable of performing appropriate cleaning depending on the level of contamination of a window.

An object of the present disclosure is to provide a window cleaning apparatus capable of providing information on the level of contamination of a window to a user.

A window cleaning apparatus according to an embodiment of the present disclosure can accommodate various installation environments and external environments by providing a plurality of cleaning modes.

The window cleaning apparatus according to an embodiment of the present disclosure can effectively clean windows by providing an optimal cleaning mode based on environmental information.

The window cleaning apparatus according to an embodiment of the present disclosure can thoroughly clean windows by spraying cleaning liquid and air.

The window cleaning apparatus according to an embodiment of the present disclosure can improve energy efficiency through an optimal cleaning mode.

The window cleaning apparatus according to one embodiment of the present disclosure includes a main body for cleaning a window, and a moving device configured to move the main body.

The main body includes a housing forming an exterior, and a cleaning module disposed on one side of the housing and configured to remove foreign substances from the window.

The cleaning module includes a fan configured to generate airflow, a scraper configured to wipe the foreign substances attached to the window, a first sensor configured to detect a distance from the window, and a second sensor configured to detect contamination of the window.

The first sensor may be an ultrasonic sensor.

The second sensor may detect the contamination of the window by detecting glossiness of the window.

The second sensor may be a surface roughness sensor.

The first sensor and the second sensor may be disposed spaced apart from each other in a left-right direction on the same side surface of the cleaning module.

The window cleaning apparatus may further include a control unit.

The control unit may detect the contamination of the window based on a measurement value of the first sensor.

The control unit may classify a level of contamination of the window into one of a plurality of preset contamination levels based on a measurement value of the second sensor.

The level of contamination of the window may be checked during an upward movement of the main body, and the scraper may be brought into close contact with the window during a downward movement of the main body.

A cleaning liquid may be sprayed and air may be sprayed during the upward movement of the main body.

The above cleaning module may further include an intake port and a discharge port formed on a front surface facing the window, an outside air inlet formed on a rear surface, and a switching valve configured to direct air introduced through the intake port or the outside air inlet to the discharge port.

The switching valve may direct air introduced through the intake port to the discharge port.

The spraying of the cleaning liquid and the spraying of the air may be performed only during an initial upward movement.

The cleaning liquid may be sprayed and air may be sprayed during the downward movement of the main body.

A rotation speed of the fan may be determined according to the level of contamination.

An amount of cleaning liquid to be sprayed may be determined according to the level of contamination.

The window cleaning apparatus may further include a display configured to display information on a level of contamination determined after completion of one cleaning operation.

The window cleaning apparatus may further include a communication unit configured to transmit information on a level of contamination determined after completion of one cleaning operation.

The window cleaning apparatus may further include a frame movably mounted on a window frame, and the main body may be movably mounted on the frame.

A window cleaning apparatus according to one embodiment of the present disclosure includes a main body configured to clean a window and a moving device configured to move the main body, in which the main body includes a housing forming an exterior, and a cleaning module disposed on one side of the housing and configured to remove foreign substances from the window, and the cleaning module includes a spray nozzle configured to spray a cleaning liquid, an intake port and a discharge port formed on a front surface facing the window, a fan configured to generate airflow, a scraper configured to wipe the foreign substances attached to the window, a first sensor configured to detect a distance from the window, and a second sensor configured to detect contamination of the window.

According to at least one of the embodiments of the present disclosure, the outer surface of a window can be automatically cleaned. This has the advantage of allowing the window to maintain a clean outer surface.

According to at least one of the embodiments of the present disclosure, the window cleaning apparatus can be moved in the up-down direction and the left-right direction, so that windows of various sizes and shapes can be cleaned with a single window cleaning apparatus.

According to at least one of the embodiments of the present disclosure, an optimal cleaning mode is provided, thereby effectively cleaning a window.

According to at least one of the embodiments of the present disclosure, the level of contamination of a window can be accurately determined, and cleaning performance can be improved by performing appropriate cleaning according to the level of contamination of the window.

According to at least one of the embodiments of the present disclosure, after completion of cleaning, information on the level of contamination of the window can be provided to a user.

Effects of the present disclosure are not limited to the effects mentioned above, and other effects not mentioned will be clearly understood by those skilled in the art from the description of the claims.

### BRIEF DESCRIPTION OF THE DRAWINGS

FIG. 1 is a view illustrating a state in which a window cleaning apparatus according to one embodiment of the present disclosure is disposed on a window frame.
FIG. 2 is a perspective view of the window cleaning apparatus according to one embodiment of the present disclosure.
FIG. 3 is a perspective view of a frame according to one embodiment of the present disclosure.
FIG. 4 is a perspective view of one side of a main body according to one embodiment of the present disclosure.
FIG. 5 is a perspective view of the other side of a main body according to one embodiment of the present disclosure.
FIG. 6 is a cross-sectional view taken along one side of FIG. 5.
FIG. 7 is a view illustrating a configuration disposed inside a housing according to one embodiment of the present disclosure.
FIG. 8 is a cross-sectional view taken along one side to illustrate an internal passage and a fan of a cleaning module according to one embodiment of the present disclosure.
FIG. 9 is a cross-sectional view of one side illustrating a front configuration of the cleaning module according to one embodiment of the present disclosure.
FIG. 10 is a diagram illustrating the structure of a main body to which rails are connected according to one embodiment of the present disclosure.
FIG. 11 is a diagram illustrating a gear module and a drive gear according to one embodiment of the present disclosure.
FIG. 12 is a view illustrating a state in which the main body moves upward according to one embodiment of the present disclosure.
FIG. 13 is a diagram illustrating a state in which the main body and the frame move left and right according to one embodiment of the present disclosure.
FIG. 14 is a perspective view of one side illustrating a cleaning module and a module moving device according to one embodiment of the present disclosure.
FIG. 15 is a cross-sectional view of one side illustrating the cleaning module according to one embodiment of the present disclosure.
FIGS. 16A and 16B are diagrams illustrating the disposition of the cleaning module according to the operation of a module device according to one embodiment of the present disclosure, FIG. 16A illustrates a state in which the cleaning module moves rearward, and FIG. 16B illustrates a state in which the cleaning module moves forward.
FIG. 17 is a block diagram of the window cleaning apparatus according to one embodiment of the present disclosure.
FIGS. 18 to 22 are diagrams for reference in the description of window state determination according to an embodiment of the present disclosure.
FIGS. 23 to 26 are diagrams for reference in the description of a cleaning mode according to an embodiment of the present disclosure.

### DETAILED DESCRIPTION OF THE PREFERRED EMBODIMENTS

Hereinafter, embodiments disclosed in this specification will be described in detail with reference to the attached drawings. Regardless of the drawing numbers, identical or similar components are assigned the same reference numbers, and redundant descriptions thereof will be omitted.

The suffixes "module" and "unit" used for components in the following description are given or used interchangeably only for the convenience of writing specifications, and do not have distinct meanings or roles in themselves.

Terms that include ordinal numbers, such as first, second, or the like, may be used to describe various components, but the components are not limited by these terms. These terms are used solely to distinguish one component from another.

When a component is referred to as being "connected" or "coupled" to another component, it should be understood that it may be directly connected or coupled to that other component, but that there may be other components intervening. Conversely, when a component is referred to as being "directly connected" or "directly coupled" to another component, it should be understood that there are no other components intervening.

Singular expressions include plural expressions unless the context clearly dictates otherwise.

Hereinafter, window cleaning apparatuses according to embodiments of the present disclosure will be described with reference to the drawings.

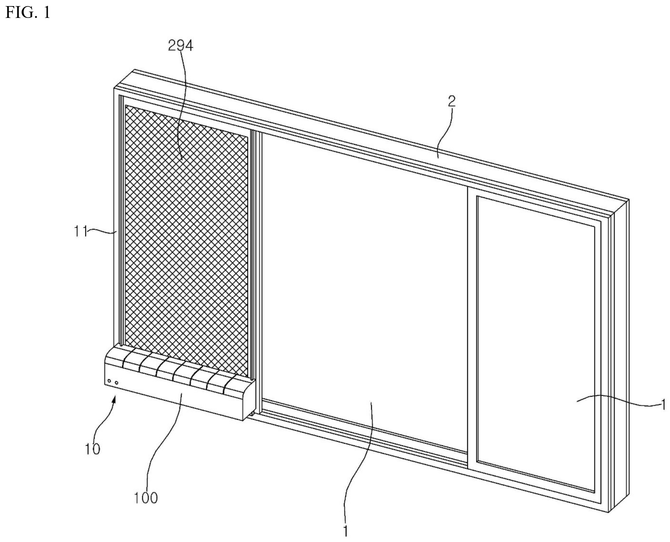

Referring to FIG. 1, a window cleaning apparatus disposed on a window frame will be described.

A plurality of windows 1 may be disposed in a window frame 2.

A window cleaning apparatus 10 is disposed on the window frame 2. The window cleaning apparatus 10 is disposed on one side of the window 1.

The window cleaning apparatus 10 is disposed so as to be able to move in a left-right direction on the window frame 2. The window cleaning apparatus 10 may clean the window 1 while moving an up-down direction on one side of the window 1.

The window cleaning apparatus 10 includes a frame 11 that is mounted on the window frame 2 and moves in the left-right direction of the window frame 2, and a main body 100 that is disposed to be able to move on the frame 11 in the up-down direction.

The frame 11 is disposed so as to be movable in the left-right direction on the window frame 2. The frame 11 may have a square frame shape and be mounted on the window frame 2. The frame 11 is disposed on one side of the window 1.

The main body 100 may move in the up-down direction along the frame 11 and clean the window 1. The main body 100 may remove or wipe off foreign substances from the window 1.

The window cleaning apparatus 10 includes a net 294 connected to each of the frame 11 and the main body 100. The length of the net 294 in the up-down direction may be changed depending on the disposition of the main body 100.

The net 294 may be a screen to prevent foreign substances or insects from entering the room.

One end of the net 294 is connected to the top of the frame 11. The other end of the net 294 is connected to the main body 100. The other end of the net connected to the main body 100 may be disposed in a rolling shape.

Accordingly, depending on the disposition of the main body 100, the rolling shape of the other end of the net 294 may move, and the length of the net 294 in the up-down direction may be changed.

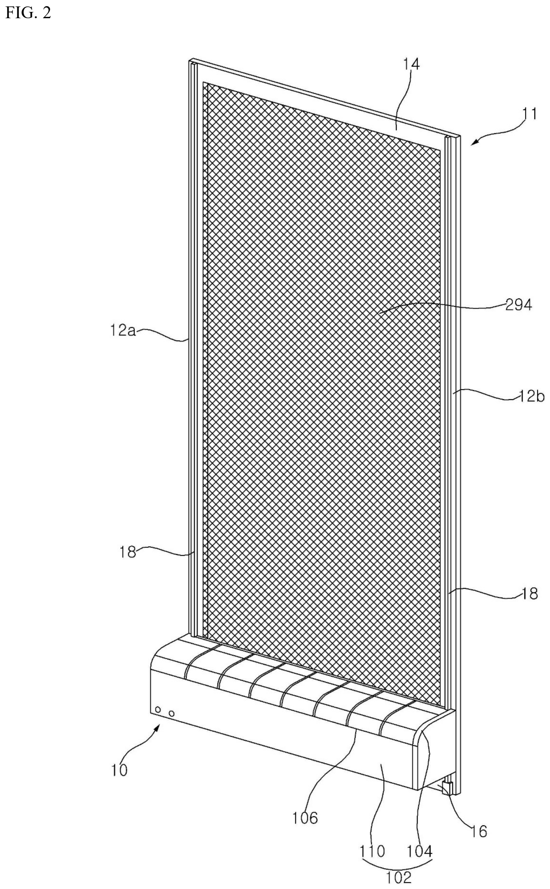

Referring to FIG. 2, the configuration of the frame and the main body is described.

The frame 11 may have a rectangular frame shape. The frame 11 may have the same shape as a net frame that is generally disposed on the outside of a window frame.

The frame 11 includes a pair of side frames 12a and 12b extending in the up-down direction and spaced apart in the left-right direction.

The frame 11 includes an upper frame 14 connecting the upper ends of the pair of side frames 12a and 12b and a lower frame 16 connecting the lower ends of a pair of side frames 12a and 12b.

A rail 18 that guides the movement of the main body 100 in the up-down direction is disposed on each of a pair of side frames 12a and 12b.

The rail 18 is disposed on the outer peripheral surface of each of the pair of side frames 12a and 12b. The rail 18 protrudes outward from the outer peripheral surface of each of the pair of side frames 12a and 12b.

The main body 100 may move in the up-down direction along the rail 18.

The main body 100 includes a housing 102 that forms the exterior. The housing 102 includes a lower case 110 that forms a space inside, and an upper case 104 that is disposed above the lower case 110.

A configuration for cleaning the window and a configuration for moving the main body 100 in the up-down direction may be disposed inside the lower case 110.

A solar panel 106 may be disposed in the upper case 104. The solar panel 106 disposed in the upper case 104 may serve as a power source for the operation of the main body 100.

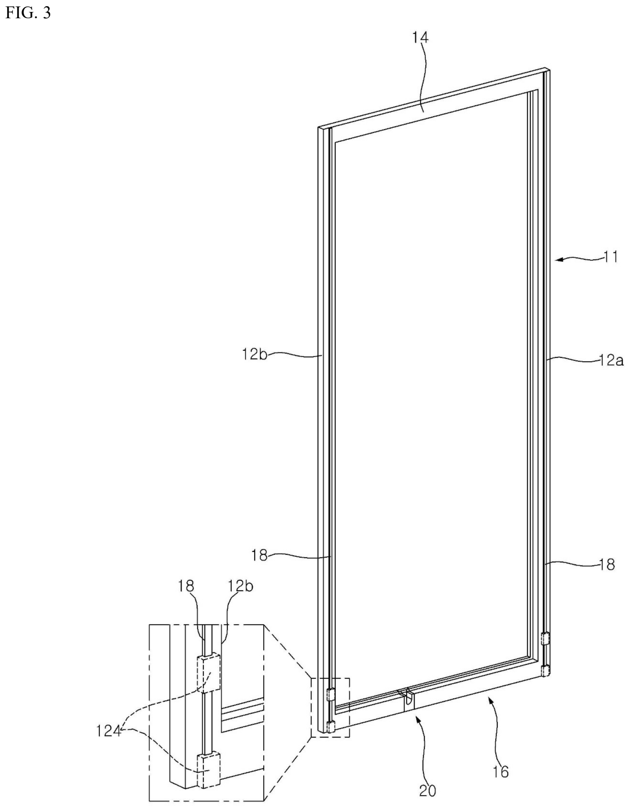

The upper case 104 may be formed into a curved shape. The upper case 104 may form at least one inclined surface. Referring to FIG. 3, the structure of the frame is further described.

The frame 11 includes the lower frame 16, the upper frame 14 disposed above and spaced apart from the lower frame 16, and the pair of side frames 12a and 12b extending in the up-down direction to connect both ends of the lower frame 16 and the upper frame 14, respectively.

The rail 18 is disposed on each of the pair of side frames 12a and 12b. A mover 124 mounted on the main body 100 may move along the rail 18. The mover 124 may move in the up-down direction along the rail 18 using a gear structure or a magnetic structure.

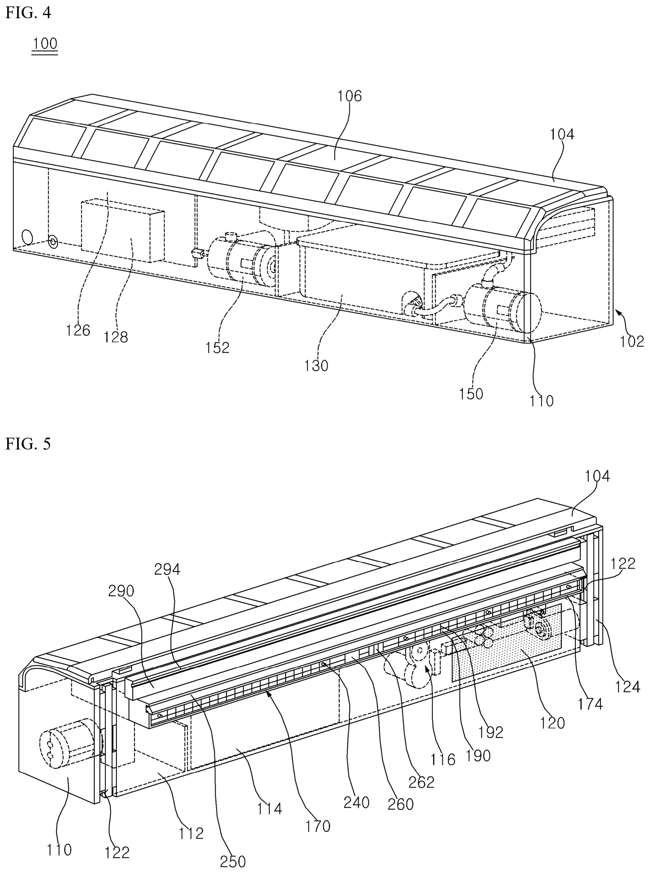

A gear module 20 that moves the frame 11 in the left-right direction is disposed on the lower frame 16. The gear module 20 may be connected to a drive gear 116 (refer to FIG. 5) disposed on the main body 100 described below.

A plurality of frame gears 22 that are rotatably disposed on the lower frame 16 and move along the window frame 2 may be disposed inside the gear module 20.

Referring to FIG. 4, the configuration of the main body is described.

The main body 100 includes the housing 102 that forms the exterior.

The housing 102 includes the lower case 110 and the upper case 104 disposed above the lower case 110.

A space is formed inside the lower case 110 and the upper case 104 in which a plurality of configurations are disposed.

The solar panel 106 is disposed in the upper case 104.

The main body 100 includes a cleaning liquid tank 130 that is disposed inside the housing 102 and stores the cleaning liquid. The main body 100 includes a first pump 150 that pumps the cleaning liquid stored in the cleaning liquid tank 130.

The first pump 150 may supply cleaning liquid to the spray nozzle 240 described below. The first pump 150 may supply the cleaning liquid stored in the cleaning liquid tank 130 to the spray nozzle 240 (refer to FIG. 5).

The main body 100 includes a second pump 152 that drains the cleaning liquid collected inside the housing 102. The second pump 152 may drain the cleaning liquid collected inside the cleaning module 170 described below to the outside of the main body 100.

The main body 100 includes a battery 128 that is disposed inside the housing 102 and stores power generated by the solar panel 106. The battery 128 may supply power to the configuration operated by the main body 100. Additionally, the battery 128 may be supplied with power through a separate external power source.

The main body 100 may include a main board 126 that is disposed inside the housing 102 and has a plurality of electronic components that control an electronically operating configuration.

Referring to FIG. 5, other configurations of the main body are described.

The main body 100 includes a first surface 112 facing the window. The housing 102 includes the first surface 112 facing the window. The lower case 110 includes the first surface 112 facing the window.

The first surface 112 is disposed to face the window when the main body 100 is mounted on the frame 11.

The main body 100 includes the cleaning module 170 that removes foreign substances present on the window. The cleaning module 170 is disposed so that a portion thereof protrudes from the first surface 112.

The cleaning module 170 may spray the cleaning liquid toward the window. The cleaning module 170 may be brought into close contact with the window and wipe off foreign substances attached to the window. The cleaning module 170 may spray air toward the window.

The cleaning module 170 includes a scraper 250 that is in close contact with the window on the front surface 174. The cleaning module 170 includes the spray nozzle 240 that sprays the cleaning liquid toward the window on the front surface 174.

A discharge port 192 through which air is discharged is formed on the front surface of the cleaning module 170. An intake port 190 through which air or cleaning liquid is suctioned is formed on the front surface 174 of the cleaning module 170.

Here, the front surface 174 of the cleaning module 170 may be a surface disposed to face the window.

An ultrasonic sensor 260 that detects the distance from the window is disposed on one side of the cleaning module 170. The distance from the window may be detected through the ultrasonic sensor 260, and the cleaning module 170 may be brought into close contact with the window.

A surface roughness sensor 262 that detects whether the window is contaminated is disposed on one side of the cleaning module 170. The surface roughness sensor 262 may detect whether the window is contaminated by detecting the glossiness of the window.

A net module 290 is disposed on the outside of the first surface 112 of the housing 102. The net module 290 is disposed above the cleaning module 170. The net 294 is exposed from the net module 290. The net module 290 forms a space within which the net 294 is disposed in a rolling state.

As the main body 100 moves in the up-down direction along the frame 11, the net rolled inside the net module 290 may be released or wound.

When the mover 124 moves the housing 102 in the up-down direction, the length of the net 294 extending downward from the upper end of the frame 11 changes.

A tank cover 114 for opening and closing an entrance through which the cleaning liquid tank 130 is inserted into and removed from the housing 102 is disposed on the first surface 112 of the housing 102. The first surface 112 of the housing 102 is disposed to face the indoor space. Accordingly, a user may withdraw or replace the cleaning liquid tank 130 from the housing 102 by disposing the tank cover 114 so that the entrance is open in the interior space.

A display 120 may be disposed on the first surface 112 of the housing 102. The display 120 may visualize and inform the user of information about the operation of the window cleaning apparatus 10 or the external environment.

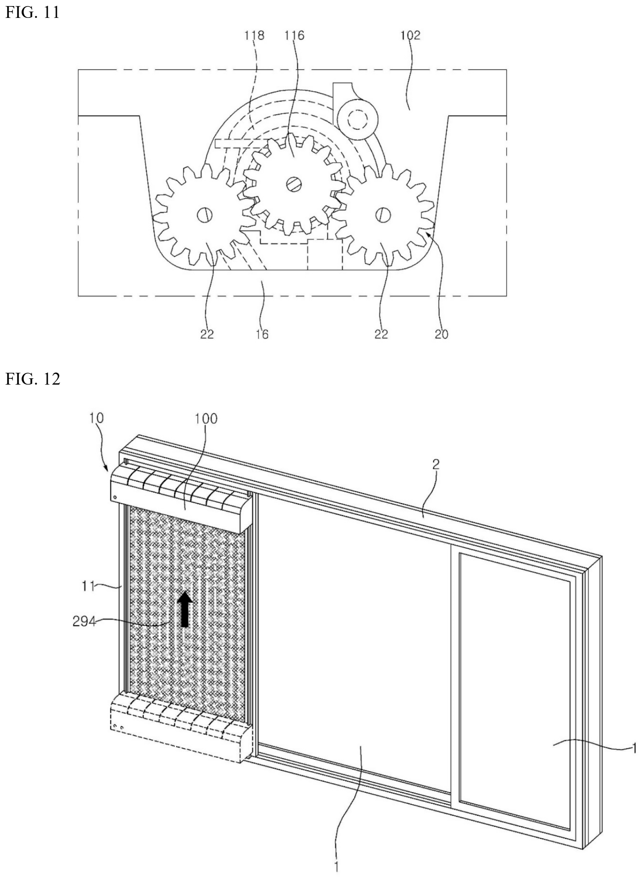

The drive gear 116 connected to the gear module 20 (refer to FIG. 11) disposed on a frame 11 is disposed on the first surface 112 of the housing 102. The main body 100 includes a drive motor 118 (refer to FIG. 11) that rotates the drive gear 116.

When the main body 100 is disposed in the lower end region of the frame 11, the drive gear 116 is engaged with the gear module 20. Therefore, as the drive gear 116 rotates, the frame 11 and the main body 100 may move in the left-right direction on the window frame 2.

A pair of case grooves 122 are formed at both ends of the first surface 112 of the housing 102. The mover 124 is disposed in each of the pair of case grooves 122. Each of the pair of case grooves 122 extends in the up-down direction.

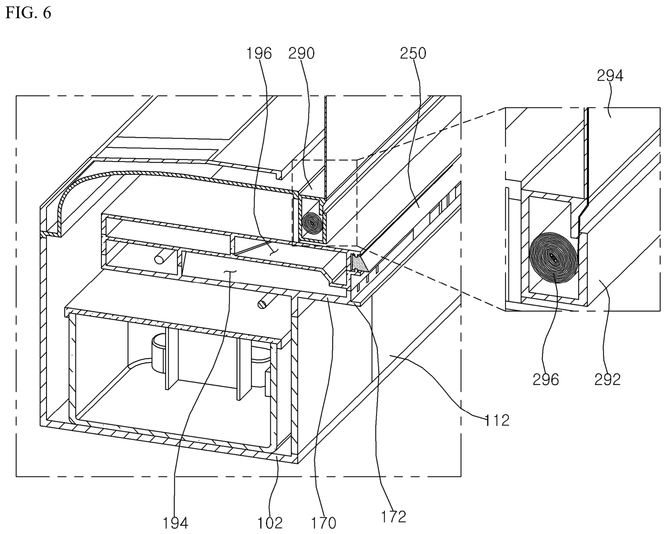

Referring to FIG. 6, the configuration and disposition of the cleaning module and the net module 290 are described.

The cleaning module 170 is disposed to protrude from the first surface 112 of the housing 102.

The cleaning module 170 is disposed below the net module 290. The cleaning module 170 protrudes further than the net module 290 in the direction in which the window is disposed.

The cleaning module 170 includes a cleaning body 172 that forms an air passage therein. Inside the cleaning body 172, an intake passage 194 through which air is suctioned in from an intake port 190 and a discharge passage 196 through which air is discharged to a discharge port 192 are formed.

The discharge passage 196 is disposed above the intake passage 194. The scraper 250 is disposed above the intake port 190 or the discharge port 192.

The net module 290 includes a net case 292, a net 294 having one end connected to the frame 11 and the other end disposed inside the net case 292, and a roller 296 for rolling the net 294 disposed inside the net case 292.

The net module 290 may be detachably disposed in the housing 102. Accordingly, the net module 290 may be fixedly mounted on the outside of the housing 102 or may be detachably disposed from the housing 102.

Depending on the disposition of the main body 100, the length of the net 294 in the up-down direction exposed to the outside varies.

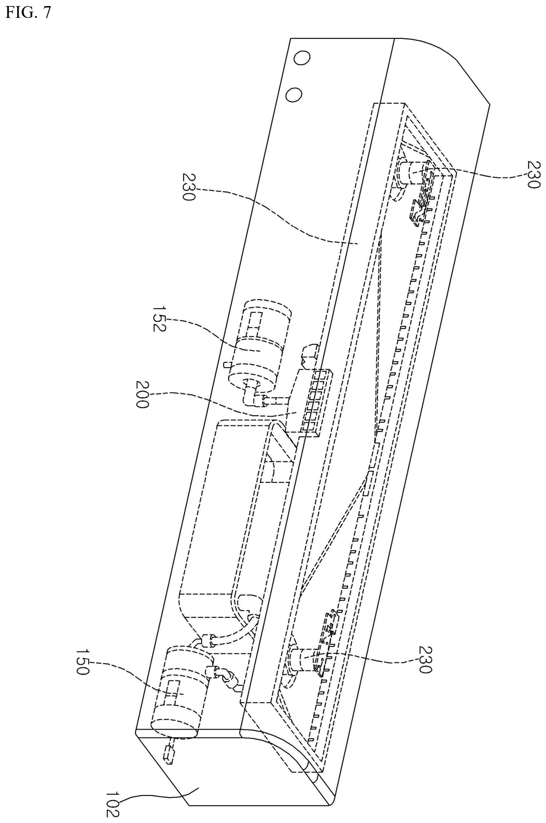

Referring to FIG. 7, the internal configuration of the main body is further described.

A portion of the cleaning module 170 may be disposed inside the housing 102. The cleaning module 170 includes a fan 230 that forms airflow in an air passage formed inside the cleaning body 172.

The fan 230 discharges air through the discharge port 192. The fan 230 suctions air through the intake port 190.

A water collecting unit 200 is disposed on the rear surface of the cleaning body 172. The water collecting unit 200 may form a space for collecting the cleaning liquid introduced together with air through the intake port 190.

The first pump 150 is disposed inside the housing 102 to supply the cleaning liquid stored in the cleaning liquid tank 130 to the spray nozzle 240. The first pump 150 is disposed on one side of the cleaning liquid tank 130.

The second pump 152 is disposed inside the housing 102 to discharge the cleaning liquid stored in the water collecting unit 200 to the outside. The second pump 152 is disposed on one side of the water collecting unit 200. The second pump 152 may discharge the cleaning liquid stored in the water collecting unit 200 to the outside of the main body 100.

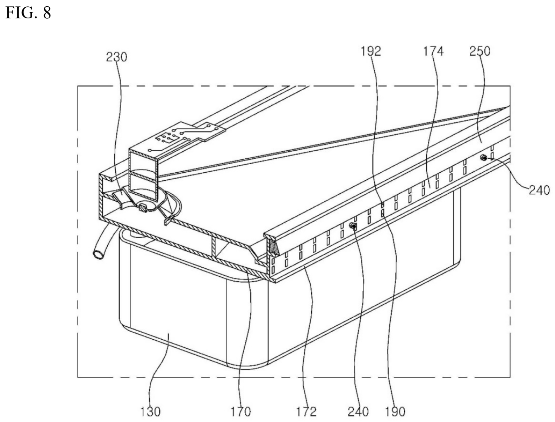

Referring to FIG. 8, the structure of the front surface of the cleaning module and the disposition of the passage and fan of the cleaning module are described.

The cleaning module 170 includes the cleaning body 172 that forms a passage through which air flows inside.

The intake port 190 and the discharge port 192 are formed on the front surface 174 of the cleaning body 172. The intake port 190 is disposed below the discharge port 192.

The scraper 250 is disposed on the front surface 174 of the cleaning body 172. The scraper 250 is disposed above the intake port 190 and the discharge port 192. The scraper 250 is disposed above the spray nozzle 240.

A plurality of intake ports 190 spaced apart in the left-right direction are formed on the front surface 174 of the cleaning body 172. The plurality of discharge ports 192 spaced apart in the left-right direction are formed on the front surface 174 of the cleaning body 172.

The cleaning module 170 includes the fan 230 that forms airflow through a passage formed inside the cleaning body 172. The fan 230 discharges air through a discharge port 192 formed on the front surface 174 of the cleaning body 172. The fan 230 introduces air into an intake port 190 formed on the front surface 174 of the cleaning body 172.

The spray nozzle 240 for spraying the cleaning liquid is disposed on the front surface 174 of the cleaning body 172. A plurality of the spray nozzles 240 are disposed spaced apart from each other in the left-right direction on the front surface of the cleaning body 172.

The spray nozzle 240 is disposed below the discharge port 192. The spray nozzle 240 is disposed above the intake port 190.

By the operation of the fan 230, air and cleaning liquid may be introduced into the cleaning body 172 through the intake port 190. By the operation of the fan 230, air may be discharged through the discharge port 192. By the operation of the first pump 150, the cleaning liquid stored in the cleaning liquid tank 130 may be sprayed through the spray nozzle 240.

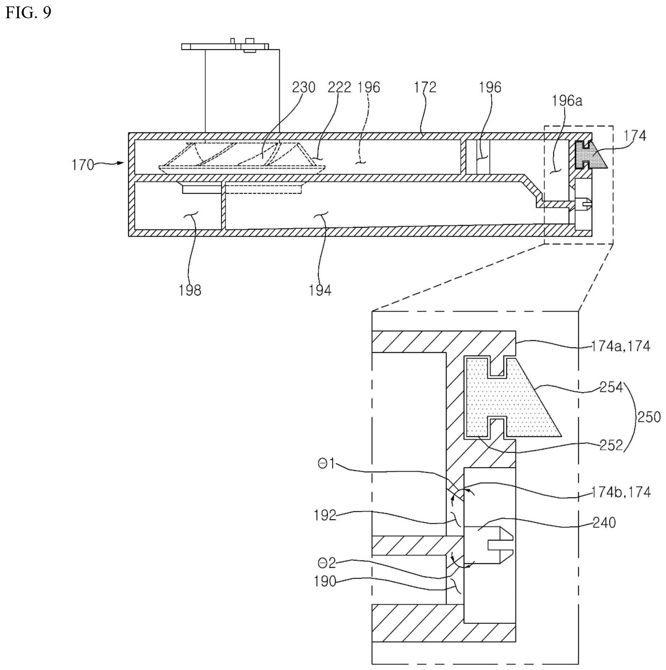

Referring to FIG. 9, the front structure of the front of the cleaning module is described.

The cleaning body 172 includes a first front surface 174a on which the scraper 250 is disposed, and the front surface 174 on which the spray nozzle 240 is disposed. A second front surface 174b is disposed rearward of the first front surface 174a. The intake port 190 and the discharge port 192 are formed on the second front surface 174b.

The second front surface 174b is disposed below the first front surface 174a.

The scraper 250 is disposed on the first front surface 174a of the cleaning body 172. The scraper 250 is mounted on the cleaning body 172. The scraper 250 may be made of a rubber material. The scraper 250 may be formed of a different material from the cleaning body 172.

The scraper 250 may be brought into close contact with the window to wipe off foreign substances attached to the window. The scraper 250 includes a fixing portion 252 that is fixed to the cleaning body 172 and a protrusion 254 that protrudes toward the window from the front surface 174 of the cleaning body 172.

The fixing portion 252 has an "H" shape in cross section and is inserted into the inside of the cleaning body 172. The fixing portion 252 may fix the scraper 250 to the cleaning body 172.

The protrusion 254 protrudes forward from the front surface 174 of the cleaning body 172. The protrusion 254 may have a shape in which the width in the up-down direction becomes narrower toward the front. The protrusion 254 may have an inclined upper surface so that the width becomes narrower toward the front.

The discharge port 192 and the intake port 190 are disposed below the scraper 250. The intake port 190 is disposed below the discharge port 192.

The upper surface of the discharge port 192 forms a surface inclined downward toward the front. Therefore, the air discharged through the discharge port 192 may be discharged in a downwardly inclined direction.

The upper surface of the intake port 190 forms a surface inclined upward toward the front. Therefore, the cleaning liquid sprayed from above the intake port 190 may be introduced to the intake port 190. In addition, the foreign substances detached from the window by the air discharged from the discharge port 192 may be introduced into the intake port 190.

The spray nozzle 240 is disposed above the intake port 190. The spray nozzle 240 is disposed on the second front surface 174b. The front end of the spray nozzle 240 may be disposed behind the first front surface 174a.

That is, the spray nozzle 240 is disposed further away from the window than the first front surface 174a. The scraper 250 protrudes forward of the spray nozzle 240.

The intake port 190 and the discharge port 192 are disposed on the second front surface 174b.

The intake passage 194 through which air introduced into the intake port 190 flows is formed inside the cleaning body 172. The lower surface of the intake passage 194 has a shape inclined downward toward the rear.

The intake passage 194 extends rearward. Accordingly, the air or cleaning liquid introduced into the intake passage 194 through the intake port 190 moves rearward. The intake passage 194 may have a shape in which the width in the left-right direction narrows toward the rear.

A connection passage 198 is formed at the rear of the intake passage 194. The connection passage 198 is disposed at the rear of the intake passage 194. The connection passage 198 extends in the left-right direction. The fan 230 is disposed at one side of the connection passage 198. The air flowing through the intake passage 194 flows into the connection passage 198.

The discharge passage 196 is disposed above the intake passage 194. An intermediate space 222, which is closed region, may be formed above the intake passage 194. The discharge passage 196 extends forward from the region where the fan 230 is disposed. The discharge passage 196 has a structure in which the passage expands in the left-right direction toward the front.

The discharge passage 196 has a structure that extends in the up-down direction from the front portion. The discharge passage 196 has a structure that extends downward from the front portion. The discharge passage 196 includes a front discharge passage 196a that extends downward from the front portion.

The length of the front discharge passage 196a formed in the up-down direction may be increased. A discharge port 192 is formed at the lower portion of the front discharge passage 196a.

An inclination angle θ1 formed by the upper surface of the discharge port 192 and the front surface 174 is formed smaller than an inclination angle θ2 formed by the upper surface of the intake port 190 and the front surface 174.

As the main body 100 moves downward, the cleaning liquid is sprayed through the spray nozzle 240. As the main body 100 moves downward, air is sprayed through the discharge port 192.

The inclination angle θ1 formed by the upper surface of the discharge port 192 and the front surface 174 is formed smaller than the inclination angle θ2 formed by the upper surface of the intake port 190 and the front surface 174, so that the air discharged from the discharge port 192 may be reflected on the window and introduced into the intake port 190.

Additionally, the cleaning liquid sprayed through the spray nozzle 240 may also be introduced into the intake port 190 through the flow of air. That is, the cleaning liquid or air may be introduced by moving to the intake port 190 through the shortest distance.

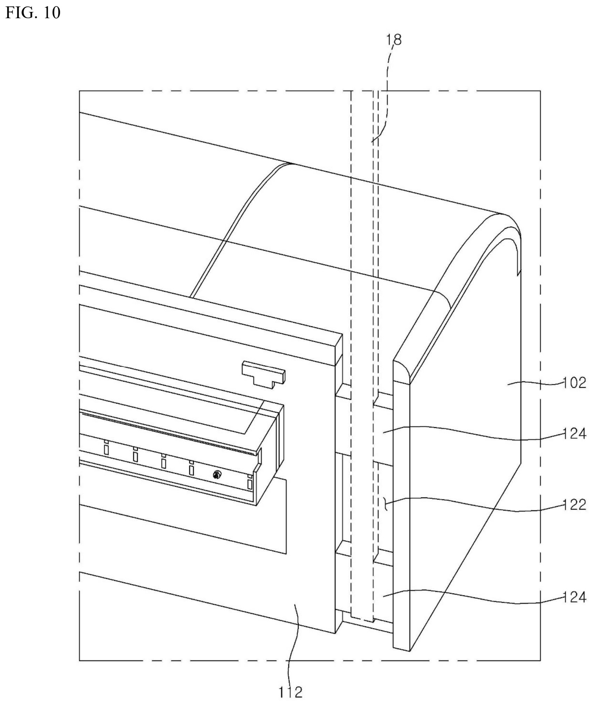

Referring to FIG. 10, the case groove and mover of the main body are described.

The case grooves 122 are formed at both ends of the first surface 112 of the housing 102. The case groove 122 extends in the up-down direction. The case groove 122 forms a concave groove inward on the first surface 112 of the housing 102.

A rail 18 disposed on the frame 11 may be disposed in the case groove 122. The state in which the main body 100 is mounted on the frame 11 may be a state in which a part of the rail 18 is inserted into the case groove 122.

The mover 124 is disposed in the case groove 122. The mover 124 may move the main body 100 the up-down direction.

After the scraper 250 is brought into close contact with the window 1, the mover 124 moves the housing 102 downward.

The mover 124 may have a structure that moves in a magnetic levitation manner. Accordingly, an electromagnet may be disposed on the rail 18. The electromagnet disposed on the rail 18 may move the mover 124 by changing the polarity of the electromagnet.

In addition, the mover 124 includes a gear structure inside and may move the main body 100 by rotating the gear structure. In this case, a rail gear (not illustrated) with which gears engage may be disposed on the rail 18.

FIG. 11 illustrates the gear module and the drive gear disposed on the frame.

The gear module 20 is disposed on the lower frame 16. The gear module 20 includes at least one frame gear 22. The frame gear 22 is disposed rotatably inside the lower frame 16. The frame gear 22 may rotate at a fixed position.

The frame gear 22 may include a cover made of rubber. In addition, a separate cover made of rubber may be disposed on the outer periphery of the frame gear 22.

The frame gear 22 may rub against the bottom surface of the window frame 2 when rotating. Therefore, when the frame gear 22 rotates, the frame gear 22 may move the frame 11 in the left-right direction while rubbing against the window frame 2.

The frame gear 22 may include a pair of frame gears 22 spaced apart in the left-right direction. A drive gear 116 is disposed between the pair of frame gears 22. The drive gear 116 meshes with each of the pair of frame gears 22.

Accordingly, the pair of frame gears 22 disposed on both sides may rotate in the same direction according to the rotation of the drive gear 116. The drive motor 118 that rotates the drive gear 116 may be disposed on one side of the drive gear 116.

Referring to FIG. 12, the movement of the window cleaning apparatus in the up-down direction is described.

By the operation of the mover 124, the main body 100 moves in the up-down direction along the frame 11. As the main body 100 moves, the length of the net 294 changes. The upper end of the net 294 is fixed to the upper frame 14. Therefore, the net 294 may be disposed from the upper frame 14 to the position where the main body 100 is disposed.

The main body 100 may remove foreign substances attached to the window 1 while moving along the frame 11. The cleaning module 170 of the main body 100 may spray air onto the window to remove the foreign substances attached to the window 1. The cleaning module 170 may spray the cleaning liquid onto the window.

The cleaning module 170 may wipe off the foreign substances attached to the window 1 while moving downward along the window 1.

The cleaning module 170 may clean the window 1 while moving downward along the frame 11. When the main body 100 moves to the lower end of the frame 11, the net 294 may be disposed to cover the window.

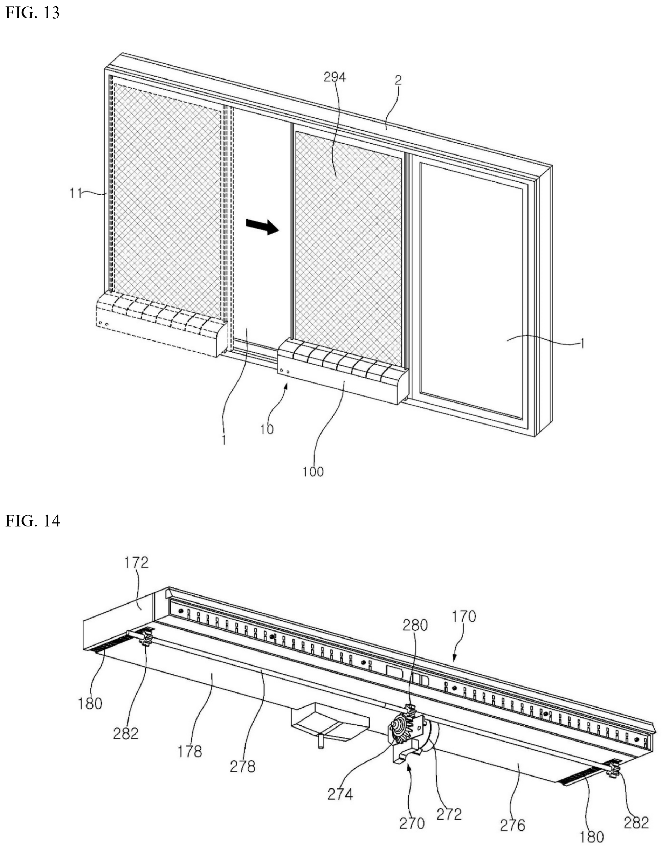

Referring to FIG. 13, the movement of the window cleaning apparatus in the left-right direction is described.

The window cleaning apparatus 10 moves in the left-right direction through the frame 11. The frame 11 may move in the left-right direction on the window frame 2.

As the frame 11 moves, the main body 100 disposed on the frame 11 also moves.

When the main body 100 is disposed at the lower end of the frame 11, the drive gear 116 of the main body 100 and the gear module 20 of the frame 11 are connected. Specifically, the drive gear 116 is engaged with the frame gear 22.

When the drive motor 118 of the main body 100 operates, the drive gear 116 rotates the frame gear 22. When the frame gear 22 rotates, the frame 11 may move in the left-right direction in a state of being disposed on the window frame 2.

The frame gear 22 may be brought into close contact with the window frame 2 to move the frame 11 through friction.

The frame 11 may move in the left-right direction in a state where the main body 100 is moved to the lower end of the frame 11. In a state where the frame 11 is moved, one side of the window may be cleaned while the main body 100 moves in the up-down direction.

Referring to FIG. 14, a module moving device for changing the disposition of the cleaning module is described.

The main body 100 includes a module moving device 270 that changes the disposition of the cleaning module 170. The module moving device 270 may move the cleaning module 170 in a front-rear direction.

The module moving device 270 brings the scraper 250 into contact with from the window 1 or separates the scraper 250 from the window 1. The module moving device 270 brings the scraper 250 into close contact with the window 1.

The module moving device 270 includes a module motor 272 and a transmission member 276 that rotates by the operation of the module motor 272 to move the cleaning module 170.

The transmission member 276 is rotatably disposed below the cleaning body 172. The transmission member 276 may have a long bar shape in the left-right direction. The transmission member 276 may have a long rod shape in the left-right direction.

The transmission member 276 rotates with the rotational force of the module motor 272 to move the cleaning body 172.

The module moving device 270 includes a module motor gear 274 that rotates by the operation of the module motor 272.

The transmission member 276 includes a first transmission gear 280 that engages with the module motor gear 274, a pair of second transmission gears 282 that is connected to a lower surface 178 of the cleaning body 172, and a rotation bar 278 that transmits the rotational force of the first transmission gear 280 to each of the pair of second transmission gears 282.

The pair of second transmission gears 282 may be disposed at both ends of the rotation bar 278. The first transmission gear 280 is disposed between the pair of second transmission gears 282.

The first transmission gear 280 and the pair of second transmission gears 282 are connected to a rotation bar 278 and rotate together.

A rack gear 180 that engages with a transmission member 276 may be disposed on the lower surface 178 of the cleaning body 172. A pair of rack gears 180 that are spaced apart on both sides and extend in the front-back direction may be disposed on the lower surface 178 of the cleaning body 172.

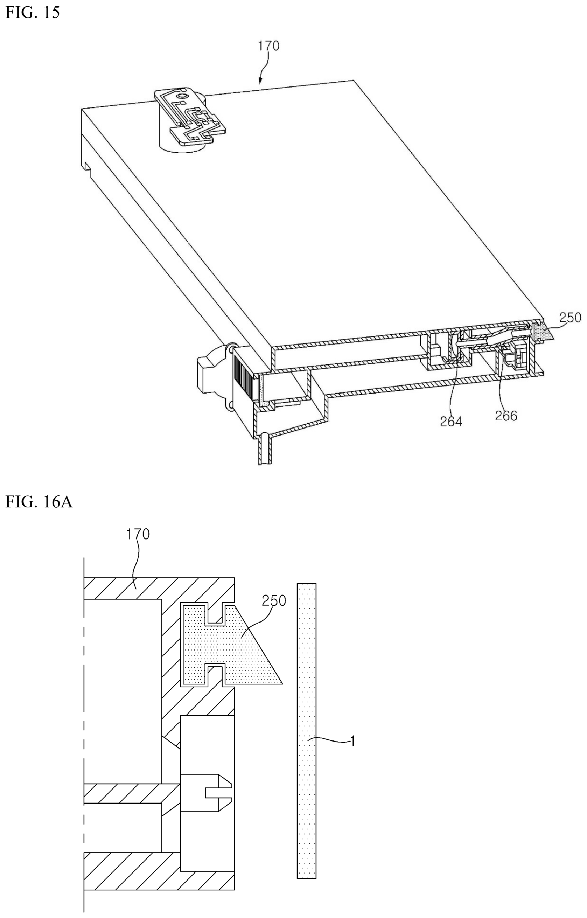

Referring to FIG. 15, a pressure sensor that detects contact with the scraper is described.

The cleaning module 170 includes a pressure sensor 264 that detects whether the scraper 250 is in contact with the window. When the scraper 250 comes into contact with the window, a force pushing the scraper 250 backward may be transmitted to the pressure sensor 264.

The pressure sensor 264 may precisely detect whether the scraper 250 is in contact with the window.

The cleaning module 170 includes a pressure transmission unit 266. The pressure transmission unit 266 may transmit the force generated by the scraper 250 to the pressure sensor 264. The pressure transmission unit 266 may be formed in the form of an air pipe. Accordingly, when the scraper 250 is brought into contact with the window 1, the air inside the pressure transmission unit 266 is compressed and the force may be transmitted to the pressure sensor 264.

Referring to FIG. 15, the disposition of the switching valve and the resulting airflow are described.

A valve motor (not illustrated) that changes the disposition of the switching valve 218 is disposed on one side of an upper connection portion 210. The valve motor may change the disposition of the switching valve 218 to open a communication hole 216 or open an outside air inlet 214.

The window cleaning apparatus may be operated in a mode in which the switching valve 218 closes the flue hole 216 and operates the fan 230.

The window cleaning apparatus may be operated in a mode in which the switching valve 218 closes the outside air inlet 214 and operates the fan 230 and the first pump (or "pump") 150.

The rotation speed of the fan 230 in the mode of closing the outside air inlet 214 may be formed to be greater than the rotation speed of the fan 230 in the mode of closing the communication hole 216. After the mode of closing the communication hole 216 is operated, the mode of closing the outside air inlet 214 may be operated.

When the switching valve 218 closes the outside air inlet 214, the switching valve 218 opens the communication hole 216. When the fan 230 operates, air is discharged through the discharge passage 196 to the plurality of discharge ports 192.

In addition, air introduced into the intake port 190 by the operation of the fan 230 flows into the intake passage 194. The air flowing through the intake passage 194 flows into the connecting passage 198 through the water collecting unit 200 and the upper connecting portion 210.

As the air flowing from the water collecting unit 200 to the upper connection unit 210 passes through a filter 212, foreign substances are removed.

Air may be introduced through the intake port 190. In addition, when the cleaning liquid is sprayed through the spray nozzle 240, the cleaning liquid may be introduced into the intake passage 194 through the intake port 190.

The cleaning liquid introduced into the intake passage 194 is collected inside the water collecting unit 200. Therefore, the cleaning liquid may be collected inside the water collecting unit 200.

The cleaning liquid collected in the water collecting unit 200 may be discharged from the water collecting unit 200 to the outside of the cleaning module 170 when the second pump 152 is operated.

When the switching valve 218 closes the communication hole 216, the switching valve 218 opens the outside air inlet 214. When the fan 230 operates, air is discharged through the discharge passage 196 to the plurality of discharge ports 192.

In addition, the operation of the fan 230 causes air to flow through the outside air inlet 214 into the connection passage 198. That is, air introduced into the upper connection part 210 through the outside air inlet 214 flows into the connection passage 198.

Since the communication hole 216 is closed, the flow of air flowing through the intake port 190 to the intake passage 194 is restricted.

Since air is discharged through the plurality of discharge ports 192, foreign substances attached to the window may be removed.

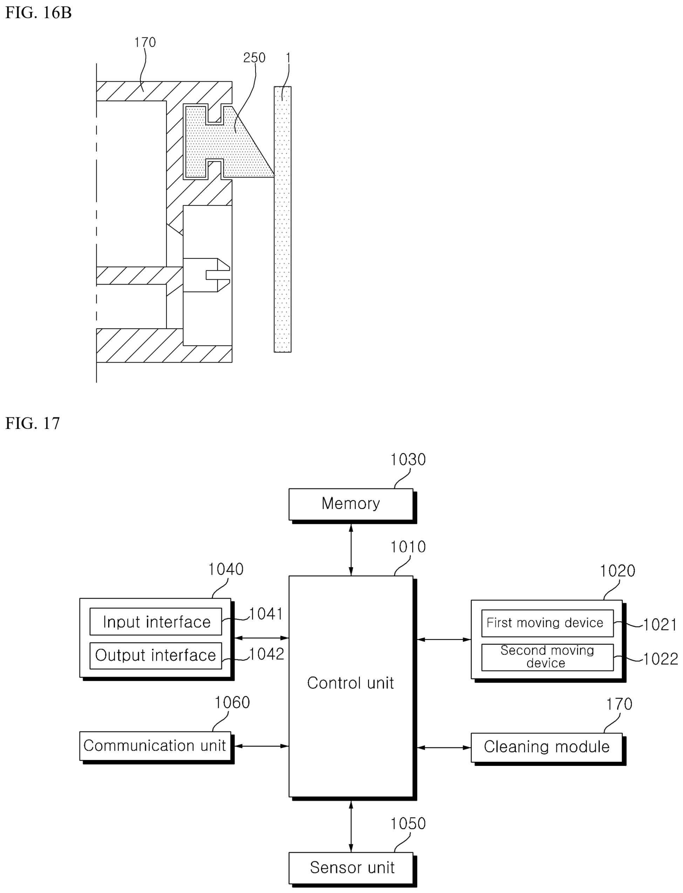

Referring to FIGS. 16A and 16B, the movement of the cleaning module is described.

As illustrated in FIG. 16A, the cleaning module 170 may be disposed at a first position P1 spaced apart from the window 1 by a predetermined distance. As illustrated in FIG. 16B, the cleaning module 170 may be disposed at a second position P2 in contact with the window 1.

The first position P1 may be a state in which the scraper 250 of the cleaning module 170 is not in contact with the window 1. The first position P1 may be a state in which pressure through the scraper 250 is not detected by the pressure sensor 264 of the cleaning module 170.

When the main body 100 moves upward, the cleaning module 170 may be disposed at the first position P1.

The first position P1 may be a state in which the module moving device 270 moves the cleaning module 170 to the rear.

The second position P2 may be a state in which the scraper 250 of the cleaning module 170 is in contact with the window 1. The second position P2 may be a state in which pressure through the scraper 250 is detected by the pressure sensor 264 of the cleaning module 170.

When the main body 100 moves downward, the cleaning module 170 may be disposed at the second position P2.

The second position P2 may be a state in which the module moving device 270 moves the cleaning module 170 forward.

The module moving device 270 primarily moves the cleaning module 170 based on the distance from the window 1 detected by the ultrasonic sensor 260. Thereafter, the module moving device 270 secondarily moves the cleaning module 170 based on pressure information detected by the pressure sensor 264.

That is, the module moving device 270 primarily moves the cleaning module 170 based on the distance detected by the ultrasonic sensor 260 at the first position P1. The position to which the cleaning module 170 primarily moves may be the second position P2 or a position between the first position P1 and the second position P2.

The distance between the window 1 and the cleaning module 170, as detected by the ultrasonic sensor 260, may have low accuracy.

In addition, even when the module moving device 270 is operated to move the cleaning module 170 based on information detected by the ultrasonic sensor 260, the scraper 250 may not be in close contact with the window 1 at a desired pressure.

Accordingly, the cleaning module 170 is moved secondarily based on the pressure information detected by the pressure sensor 264. At this time, the scraper 250 may be brought into close contact with the window 1 to an extent sufficient to remove foreign substances attached to the window 1 while moving downward.

That is, the module moving device 270 may move the cleaning module 170 so that the pressure detected by the pressure sensor 264 is formed between a first set pressure and a second set pressure.

The first set pressure may be a pressure generated at a point in time when the scraper 250 starts to come into contact with the window 1. The second set pressure may be a pressure at a point in time when the force due to friction between the scraper 250 and the window 1 becomes greater than the force of the mover 124 moving the main body 100 in the up-down direction.

Therefore, when the second set pressure is exceeded, the main body 100 may not move in the up-down direction even when the mover 124 operates.

After the scraper 250 is brought into close contact with the window 1, the mover 124 moves the housing 102 downward.

After the module moving device 270 brings the cleaning module 170 into close contact with the window 1, the mover 124 and the first pump 150 operate. However, before the module moving device 270 moves the cleaning module 170 to the window 1, the first pump 150 temporarily operates so that the cleaning liquid is sprayed through the spray nozzle 240.

By spraying the cleaning liquid onto the window 1 by the first pump 150, the frictional force generated between the window 1 and the scraper 250 may be alleviated. Accordingly, the force required for the mover 124 to move the main body 100 downward may be reduced.

FIG. 17 is a block diagram of the window cleaning apparatus according to one embodiment of the present disclosure.

Referring to FIG. 17, the window cleaning apparatus 10 may include a control unit 1010 that controls the overall operation of the window cleaning apparatus 10.

At least some of internal blocks of the window cleaning apparatus 10 illustrated in FIG. 17, such as the control unit 1010, may be disposed inside the main body 100. For example, the control unit 1010 may be mounted on the main board 126.

The window cleaning apparatus 10 may include a memory 1030, a sensor unit 1050, a communication unit 1060, an interface 1040, or the like.

The memory 1030 may store data for controlling the operation of the window cleaning apparatus 10, data detected or measured through the sensor unit 1050 during operation, and data received through the communication unit 1060. Meanwhile, the window cleaning apparatus 10 may include a buffer for temporarily storing data, and the buffer may be included in the control unit 1010 or the memory 1030.

The control unit 1010 may process various data received through the communication unit 1060 to update the memory 1530. For example, when the data input through the communication unit 1060 is data updated for an operation program prestored in the memory 1030, the memory 1030 may be updated using the data, and when the input data is a new operation program, the data may be additionally stored in the memory 1030.

The sensor unit 1050 may include a plurality of sensors to measure illuminance, humidity, or the like, or sense the operating state of the window cleaning apparatus 10. For example, the sensor unit 1050 may include the above-described ultrasonic sensor 260, surface illuminance sensor 262, and pressure sensor 264. In addition, the sensor unit 1050 may include an illuminance sensor (not illustrated), a temperature sensor (not illustrated), a humidity sensor (not illustrated), an air quality sensor (not illustrated), or the like.

The ultrasonic sensor 260 may measure the distance to the window 1. The ultrasonic sensor 260 may also measure transparent glass, so it is suitable for measuring the distance to the window 1 and/or window frame 2.

The ultrasonic sensor 260 emits sound waves in the direction of the window. The ultrasonic sensor 260 transmits an ultrasonic signal, which is a distance measurement signal, in the direction of the window. The ultrasonic sensor 260 receives the reflected signal. The closer the distance between the ultrasonic sensor 260 and the object, the faster the reflected ultrasonic signal is received. The farther the distance between the ultrasonic sensor 260 and the object, the slower the reflected ultrasonic signal is received. The distance may be measured based on the time it takes for the ultrasonic signal of the ultrasonic sensor 260 to be reflected from the window 1 and/or the window frame 2 and return.

The control unit 1010 may control the sensing operation of the ultrasonic sensor 260. The control unit 1010 may determine the distance to the window 1 and/or the window frame 2 based on the measurement value of the ultrasonic sensor 260. Here, the measurement value of the ultrasonic sensor 260 may be the data itself measured by the ultrasonic sensor 260, or secondary data (amplification, calculation, or the like) obtained processing the data measured by the ultrasonic sensor 260 by the ultrasonic sensor 260 or the control unit 1010.

For example, the measurement value may be time difference data of the transmission and reception signals of the ultrasonic sensor 260 or distance data based on the time difference data.

Alternatively, the measurement value may be intensity data of the signal received from the ultrasonic sensor 260 or distance data based on the signal intensity data.

The ultrasonic sensor 260 transmits and receives ultrasonic signals at a specific point. The control unit 1010 may control the cleaning operation of the cleaning module 170 and the movement operation of a movement device 1020 based on the data sensed by the ultrasonic sensor 260.

The surface illuminance sensor 262 measures the roughness on the window 1 side in front of the window cleaning apparatus 10, and an illuminance sensor may measure the illuminance on the outside at the rear of the window cleaning apparatus 10.

Additionally, the temperature sensor may measure temperature, the humidity sensor may measure humidity, and the air quality sensor may measure air quality.

Additionally, the sensor unit 1050 may include a motor sensor that senses the operating state of the drive motor 118. For example, the sensor unit 1050 may include a current sensor that measures the current of the drive motor 118. The sensor unit 1050 may include a speed sensor that measures the rotational speed of the drive motor 118.

The control unit 1010 may control the flow of data input or output to the window cleaning apparatus 10 and generate and apply a control command based on data input from the sensor unit 1050.

Meanwhile, the window cleaning apparatus 10 may communicate with other devices such as a server, home appliance, or terminal through a communication unit 1060 to transmit and receive data.

The communication unit 1060 may include one or more communication modules. The communication unit 1060 may include a transmitter (not illustrated) capable of transmitting predetermined data to another device. In addition, the communication unit 1060 may include a receiver (not illustrated) capable of receiving predetermined data from another device. The transmitter and receiver may be integrated to form a transceiver.

The user may control the window cleaning apparatus 10 from indoors using a user terminal such as a smartphone.

The input interface 1041 may receive various user commands related to the operation of the window cleaning apparatus 10 and transmit a control signal corresponding to the input commands to the control unit 1010. The input interface 1041 may include a touch pad, physical buttons, or the like.

According to an embodiment, the input interface 1041 may include a receiver for receiving a control command transmitted by a remote control device (not illustrated).

The user may control the window cleaning apparatus 10 from indoors using a remote control device.

The output interface 1041 may be equipped with the display 120 described above. For example, the display 120 may display an operating status of the window cleaning apparatus 10, an operating state related to occurrence of an error or the like, and information such as weather.

The output interface 1041 may be equipped with an audio device such as a speaker (not illustrated) or a buzzer (not illustrated). For example, the output interface 1041 may output a sound effect regarding the operating status of the window cleaning apparatus 10 and may output a predetermined warning sound when an error occurs.

Depending on the embodiment, the display 120 may be implemented as a touchscreen and may also be used as an input means. In addition, when the display 120 is a touchscreen, at least some of the hard buttons included in the input interface 1041 may be removed.

The control unit 1010 may be connected to each component provided in the window cleaning apparatus 10. For example, the control unit 1010 may transmit and/or receive signals to and/or from respective components provided in the window cleaning apparatus 10 and control the overall operation of the respective components.

The control unit 1010 may include at least one processor, and may control the overall operation of the window cleaning apparatus 10 using the processor included therein. Here, the processor may be a general processor such as a central processing unit (CPU). Of course, the processor may be a dedicated device such as an ASIC or another hardware-based processor.

The window cleaning apparatus 10 may include the cleaning module 170 that cleans the window 1. The control unit 1010 may control the cleaning module 170 to clean the window 1.

The window cleaning apparatus 10 may provide the plurality of cleaning modes. The user may select any one of the plurality of cleaning modes. The control unit 1010 may control the window cleaning apparatus 10 according to the selected cleaning mode.

Additionally, when the user selects an automatic mode, the control unit 1010 may automatically select the cleaning mode based on information obtained through the sensor unit 1050 and/or the communication unit 1060. Accordingly, automatic cleaning according to a set schedule and external environment is possible, and windows may be kept clean.

The window cleaning apparatus 10 may include the moving device 1020 that moves the window cleaning apparatus 10. The moving device 1020 may move at least the main body 100 in a predetermined direction.

The control unit 1010 may control the moving device 1020 to move the main body 100. In addition, the control unit 1010 may control the moving device 1020 to move the frame 11.

The frame 11 is movably mounted on the window frame 2, and the main body 100 is movably mounted on the frame 11.

The moving device 1020 includes a first moving device 1021 for the movement in the up-down direction and a second moving device 1022 for the movement in the left-right direction.

The first moving device 1021 may move the main body 100 in the up-down direction. The main body 100 may move in the up-down direction along the frame 11 to clean the window 1. For example, the first moving device 1021 may include the mover 124.

The second moving device 1022 may move the frame 11 in the left-right direction. For example, the second moving device 1022 may include the gear module 20, the drive gear 116, and the drive motor 118.

The main body 100 may be mounted on the frame 11 to move along with the movement direction of the frame 11. Accordingly, the second moving device 1022 may move the frame 11 and the main body 100 in the left-right direction with respect to the window 1.

The window cleaning apparatus 10 may be mounted on a conventional window frame and screen frame, and may clean windows by moving in the up-down direction and the left-right direction, regardless of the shape or number of windows.

The window cleaning apparatus 10 may provide a plurality of spray modes.

The control unit 1010 may implement various spray modes by controlling the spray nozzle 240 that sprays the cleaning liquid and the fan 230 that generates airflow. If necessary, the control unit 1010 may operate the first pump 150 to supply the cleaning liquid.

According to one embodiment, the spray nozzle 240 may be turned on/off under the control of the control unit 1010, thereby controlling whether or not to spray. In another embodiment, as the cleaning liquid is supplied by the operation of the first pump 150, the cleaning liquid may be sprayed through the spray nozzle 240. In the present specification, operating the spray nozzle 240 is a concept that includes not only the turning on of the spray nozzle 240 but also the operation of the first pump 150.

Meanwhile, the control unit 1010 may selectively open and close the outside air inlet 214, which is formed on the rear surface and through which outside air is introduced, and the internal communication hole 216 by controlling the switching valve 218.

The control unit 1010 may open the outside air inlet 214 and close the communication hole 216 by controlling the switching valve 218. Accordingly, the outside air of the cleaning body 172 may be directed to the discharge passage 196 and the discharge port 192.

The control unit 1010 may close the outside air inlet 214 and open the communication hole 216 by controlling the switching valve 218. Accordingly, air flowing through the intake port 190 and intake passage 194 may be directed to the discharge passage 196 and discharge port 192.

The control unit 1010 may provide more diverse spray modes by controlling the spray nozzle 240, fan 230, and switching valve 218.

For example, the spray mode may include a simultaneous spray mode that sprays and recovers the cleaning liquid and air, an air-only spray mode that sprays only air, a cleaning liquid-only spray mode that sprays only the cleaning liquid, and an air spray/injection mode that sprays and does not recover the cleaning liquid and air.

In the simultaneous spray mode, the control unit 1010 may operate the spray nozzle 240 to spray the cleaning liquid and operate the fan 230 to spray air. In addition, the control unit 1010 may control the switching valve 218 to close the outside air inlet 214 and open the communication hole 216. Accordingly, the sprayed cleaning liquid and air may be recovered to the intake port 190, and the air flowing through the intake port 190 may be directed to the discharge port 192.

In the air-only spray mode, the control unit 1010 may operate the fan 230 to spray air. When large yellow dust particles adhere to the glass surface and do not easily fall off, the glass surface may be cleaned by spraying only the discharge air.

Depending on the setting, in the air-only spray mode, the control unit 1010 may control the switching valve 218 to open the outside air inlet 214 and close the communication hole 216. The mode in which the outside air inlet 214 is opened and only air is sprayed may also be called an outside air intake mode.

Depending on the setting, in the outside air intake mode, the control unit 1010 may control the switching valve 218 to open the outside air intake port 214 and close the communication hole 216 without operating the fan 230, thereby allowing only outside air to be introduced.

In the cleaning liquid-only spray mode, the control unit 1010 may operate the spray nozzle 240 to spray air. When an external environment with very strong winds is created, window cleaning is possible using only the cleaning liquid spray, and the cleaning liquid may be easily evaporated by the wind.

In the air spray/injection mode, the control unit 1010 may operate the spray nozzle 240 to spray the cleaning liquid and operate the fan 230 to spray air. In addition, the control unit 1010 may control the switching valve 218 to open the outside air inlet 214 and close the communication hole 216 so that the sprayed cleaning liquid and air are not recovered to the intake port 190. In addition, the outside air may be directed to the discharge port 192. Even in rainy weather, the windows may be kept clean by the cleaning liquid and discharged air.

The spray mode may also be utilized to implement various cleaning modes.

According to an embodiment of the present disclosure, the level of contamination of a window can be accurately determined, and cleaning performance can be improved by performing appropriate cleaning according to the level of contamination of the window.

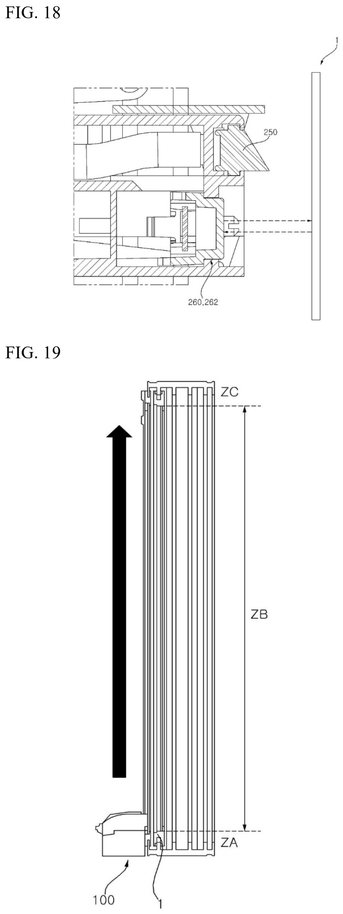

FIGS. 18 to 22 are diagrams for reference in the description of window state determination according to an embodiment of the present disclosure.

The sensor unit 1050 includes various sensors, and at least some of the sensors may be provided in the main body 100. In particular, a first sensor 260 for detecting the distance from the window and a second sensor 262 for detecting contamination of the window may be disposed in the housing 102.

Referring to FIG. 5 and FIG. 18, the sensor unit 1050 may include a first sensor 260 and a second sensor 262 disposed on one side surface of the cleaning module 170. The first sensor 260 and the second sensor 262 may be disposed spaced apart from each other in the left-right direction on the same side surface of the cleaning module 170.

The control unit 1010 may determine the state of the window 1 based on data acquired through the sensor unit 1050.

The first sensor 260 may be a sensor for measuring the distance to the window 1. For example, the first sensor 260 may be the ultrasonic sensor 260 described above. The control unit 1010 may determine the distance to the window 1 based on the measurement value of the ultrasonic sensor 260.

The control unit 1010 can determine the level of contamination of the window 1 based on the measurement value of the second sensor 262. For example, the second sensor 262 may be the surface roughness sensor 262 described above. The second sensor 262 may be a gloss sensor that measures the glossiness of the window 1, such as the surface roughness sensor 262.

Hereinafter, an example will be described in which the first sensor 260 is the ultrasonic sensor 260 and the second sensor 262 is the gloss sensor 262.

Referring to FIG. 19, as the main body 100 moves upward, sensors 260 and 262 acquire data in a ZB region. The ZB region is positioned between a lowermost ZA region and an uppermost ZC region.

The control unit 1010 may determine the state of the window 1 based on the sensing data (measurement values) of the sensors 260 and 262 during the upward movement of the main body 100.

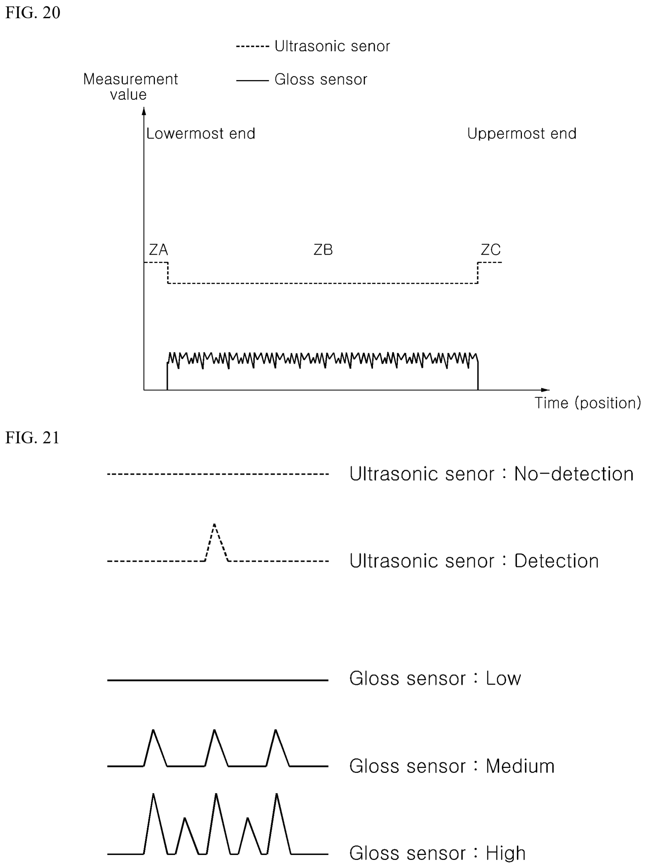

FIG. 20 illustrates measurement values obtained by the ultrasonic sensor 260 and the gloss sensor 262 as the main body 100 moves upward from the lowermost ZA region through the intermediate ZB region to the uppermost ZC region.

FIG. 20 illustrates the position (time) when the main body 100 moves from the lowermost end to the uppermost end on the X-axis, and the measurement values based on the sensing data of the ultrasonic sensor 260 and the gloss sensor 262 on the Y-axis. The measurement values may be the data itself measured by the sensors or processed secondary data.

The closer the distance between the ultrasonic sensor 260 and the object, the faster the reflected ultrasonic signal is received. Furthermore, the closer the distance between the ultrasonic sensor 260 and the window 1, the greater the intensity and quantity of the reflected ultrasonic signal. Therefore, the position of the window 1 and the distance to the window 1 may be determined based on the intensity or quantity of the reflected ultrasonic signal.

The control unit 1010 may determine the location of the ZB region to be cleaned by the magnitude of the measurement value of the ultrasonic sensor 260. The window frame 2 is positioned in the lowermost ZA region and the uppermost ZC region, so the measurement value of the ultrasonic sensor 260 may be large. The measurement value of the ultrasonic sensor 260 in the intermediate ZB region may be smaller than the measurement values in the lowermost ZA region and the uppermost ZC region.

The gloss sensor 262 may read a sensitive value that is much smaller than the measurement value of the ultrasonic sensor 260. The gloss sensor 262 may measure the level of contamination by reading the roughness of the surface.

The control unit 1010 may classify the level of contamination of the window 1 into one of multiple contamination levels based on the measurement value of the gloss sensor 262. For example, a plurality of contamination levels can include three levels: high, medium, and low.

Meanwhile, the control unit 1010 may also determine the contamination of the window 1 based on the measurement value of the ultrasonic sensor 260. Specifically, when the measurement value of the ultrasonic sensor 260 suddenly increases, the control unit 1010 may determine that there are foreign substances and determine the corresponding location as a contamination location.

In addition, the control unit 1010 may more accurately determine the level of contamination by analyzing two measurement values together using an ultrasonic sensor 260 and a sensitive gloss sensor 262.

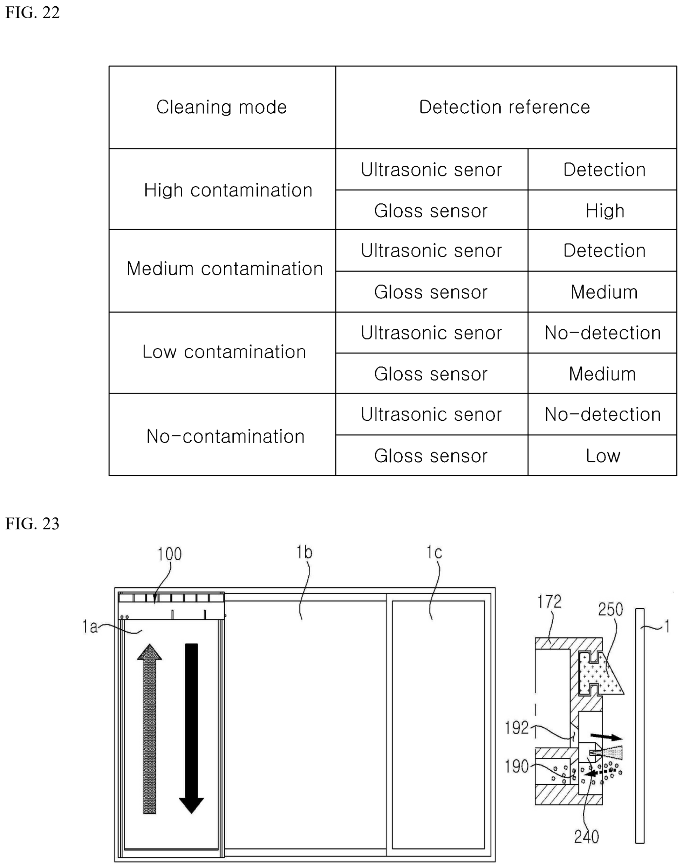

Referring to FIGS. 21 and 22, the control unit 1010 may determine that foreign substances are detected when the measurement value of the ultrasonic sensor 260 suddenly increases, and that foreign substances are not detected otherwise.

In addition, the control unit 1010 may determine the contamination level as one of three levels, that is, high, medium, and low, based on the magnitude of the roughness measurement value of the gloss sensor 262. The control unit 1010 may count the number of times the roughness measurement value of the gloss sensor 262 is higher than a reference value and determine that the higher the number of times, the higher the contamination level. In addition, the control unit 1010 may determine that the higher the roughness measurement value of the gloss sensor 262, the higher the contamination level.

In addition, the control unit 1010 may control the cleaning mode to the strongest heavy-contamination mode when the determination result based on the measurement value of the ultrasonic sensor 260 indicates detection and the determination result based on the measurement value of the gloss sensor 262 indicates the high contamination level.

The control unit 1010 may control the corresponding region not to be cleaned when the determination result based on the measurement value of the ultrasonic sensor 260 indicates non-detection and the determination result based on the measurement value of the gloss sensor 262 indicates a low contamination level.

The control unit 1010 may control the cleaning mode to be weaker than that for the high contamination level when the determination result based on the measurement value of the gloss sensor 262 indicates the medium contamination level.

The control unit 1010 may perform control more precisely by using the determination result based on the measurement value of the ultrasonic sensor 260 when the determination result based on the measurement value of the gloss sensor 262 indicates the medium contamination level.

The control unit 1010 may control the cleaning mode to the medium-contamination mode that is one level lower than that for the high contamination level when the determination result based on the measurement value of the gloss sensor 262 indicates the medium contamination level and the determination result based on the measurement value of the ultrasonic sensor 260 indicates the detection.

The control unit 1010 may control the cleaning mode to the low-contamination mode that is one level lower than that for the medium contamination level when the determination result based on the measurement value of the gloss sensor 262 indicates the medium contamination level and the determination result based on the measurement value of the ultrasonic sensor 260 indicates non-detection.

Depending on the determined level of contamination, the rotation speed of the fan 230 and the amount of cleaning liquid to be sprayed may be determined. The control unit 1010 may control the cleaning mode to one of a high-contamination mode, a medium-contamination mode, a low-contamination mode, and a no-contamination mode depending on the determined level of contamination. The rotation speed of the fan 230, the amount of cleaning liquid to be sprayed, or the like may be set in the high-contamination mode, the medium-contamination mode, the low-contamination mode, and the no-contamination mode.

For example, in the high-contamination mode, the rotation speed of the fan 230 may be the fastest and the amount of cleaning liquid to be sprayed may be the largest. In the medium-contamination mode, the rotation speed of the fan 230 may be one level slower and the amount of cleaning liquid to be sprayed may be one level smaller than in the high-contamination mode. In the low-contamination mode, the rotation speed of the fan 230 may be one level slower and the amount of cleaning liquid to be sprayed may be one level smaller than in the medium-contamination mode. In the no-contamination mode, the fan 230 may be set not to rotate and the cleaning liquid may be set not to be sprayed.

FIGS. 23 to 26 are diagrams for reference in the description of the cleaning mode according to an embodiment of the present disclosure.

In an intensive mode, the control unit 1010 may control the cleaning mode according to the contamination mode determined through the sensors 260 and 262 capable of measuring the level of contamination.

Referring to FIG. 23, in the intensive mode, the level of contamination may be checked during the upward movement of the main body 100. For example, the gloss sensor 262 may detect the level of the glossiness of the window to detect the contamination of the window.

The control unit 1010 may determine the level of contamination of the window 1 based on the sensing data of the gloss sensor 262 during the upward movement of the main body 100. In addition, the control unit 1010 may determine the level of contamination of the window 1 based on the sensing data of the ultrasonic sensor 260 and the gloss sensor 262 during the upward movement of the main body 100.

In the intensive mode, the control unit 1010 may control the cleaning mode to one of the high-contamination mode, medium-contamination mode, low-contamination mode, and no-contamination mode depending on the determined level of contamination.

In the intensive mode, the control unit 1010 may determine the number of window cleaning operations according to the determined contamination intensity (high, medium, low, or no contamination).

For example, when the level of contamination of side windows is low while contamination of the central window is high, the number of cleaning operations for the central window may be set to two, and sectional repetition may be performed.

In addition, the control unit 1010 may control the cleaning mode to the simultaneous spray mode, in which the cleaning liquid is sprayed and air is sprayed, during the upward movement of the main body 100.

In the simultaneous spray mode, the control unit 1010 may operate the spray nozzle 240 to spray the cleaning liquid and operate the fan 230 to spray air. In addition, the control unit 1010 may control the switching valve 218 to close the outside air inlet 214 and open the communication hole 216. Accordingly, the sprayed cleaning liquid and air may be collected to the intake port 190, and the air flowing through the intake port 190 may be directed to the discharge port 192.

Referring to FIG. 23, the cleaning module 170 sprays cleaning liquid and air during the upward movement of the main body 100, and collects the cleaning liquid. To this end, the spray nozzle 240 and the fan 230 may operate, and the switching valve 218 may operate to direct air introduced through the intake port 190 to the discharge port 192.

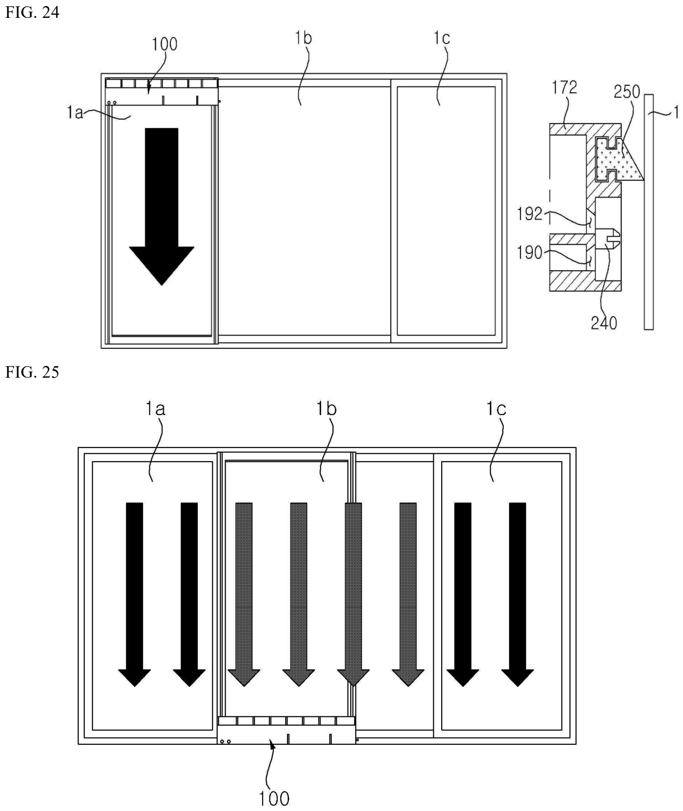

Referring to FIG. 24, the cleaning module 170 may remove foreign substances by bringing the scraper 250 into close contact with the window 1 during the downward movement of the main body 100.

Meanwhile, the control unit 1010 may control the cleaning mode to the simultaneous spray mode, in which the cleaning liquid is sprayed and air is sprayed, only during the initial upward movement of the main body 100. During a second upward movement, only the main body 100 may move upward.

Referring to FIG. 25, when the cleaning is performed in the order of the left window 1a, the central window 1b, and the right window 1c, the control unit 1010 may control the main body 100 to operate in a scraper cleaning mode of FIG. 24 during the downward movement.

The control unit 1010 may determine the number of cleaning operations for a given region based on the determined level of contamination. In addition, the control unit 1010 may determine the section in which repeated cleaning is to be performed based on the determined level of contamination.

In the intensive mode, the control unit 1010 may determine the number of window cleaning operations based on the contamination intensity determined by the sensors 260 and 262 capable of measuring the level of contamination. For example, when the level of contamination of the left and right windows 1a and 1c is low but the level of contamination of the central window 1b is high, the number of cleaning operations for the central window may be set to 2 and repeated in sections.

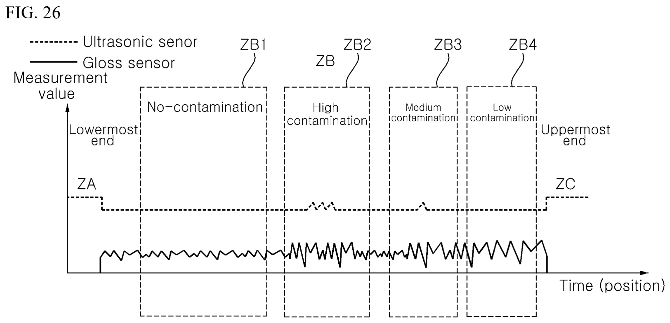

Referring to FIG. 26, when operating in the intensive mode, the main body 100 moves from the ZA region to the ZC region and determines a contamination state of the window 1 as one of high contamination, medium contamination, low contamination, and no contamination.

Additionally, the control unit 1010 may subdivide the ZB region according to the contamination state. For example, the ZB region may be divided into a ZB1 region with no-contamination, a ZB2 region with high contamination, a ZB3 region with medium contamination, and a ZB4 region with low contamination.

The control unit 1010 may store, in the memory 1030, contamination states in the ZB region, such as high contamination, medium contamination, low contamination, and no contamination, together with time and/or position information.

In addition, the control unit 1010 may provide an appropriate cleaning method (increase or decrease in motor RPM, increase or decrease in amount of cleaning liquid) corresponding to the contamination state while moving from the ZC region to the ZA region.

The control unit 1010 may provide the user with information on the level of contamination of the window after cleaning is completed.

After a single cleaning operation is completed, the control unit 1010 may control the display 120 to display information on the determined level of contamination.

In addition, after the single cleaning operation is completed, the control unit 1010 may control the communication unit 1060 to transmit information on the determined level of contamination to a designated device such as a user terminal or a predetermined server.

Additionally, after the single cleaning operation is completed, the control unit 1010 may recheck a contamination state and may autonomously determine whether to perform re-cleaning, or may provide the corresponding information to the user. Accordingly, a region that has not been sufficiently cleaned may be intensively cared for.

Although the preferred embodiments of the present disclosure have been illustrated and described above, the present disclosure is not limited to the specific embodiments described above, and various modifications may be made by a person having ordinary skill in the art to which the present disclosure pertains without departing from the gist of the present disclosure as claimed in the claims.

## Claims

1. A window cleaning apparatus comprising:
a main body (100) configured to clean a window; and
a moving device (1020) configured to move the main body (100),
wherein the main body (100) includes
a housing (102) forming an exterior, and
a cleaning module (170) disposed on one side of the housing (102) and configured to remove foreign substances from the window, and
the cleaning module (170) includes
a fan (230) configured to generate airflow,
a scraper (250) configured to wipe the foreign substances attached to the window,
a first sensor (260) configured to detect a distance from the window, and
a second sensor (262) configured to detect contamination of the window.

2. The window cleaning apparatus of claim 1, wherein the first sensor (260) is an ultrasonic sensor, and
the second sensor (262) is a surface roughness sensor configured to detect the contamination of the window by detecting glossiness of the window.

3. The window cleaning apparatus of claim 1 or 2, wherein the first sensor (260) and the second sensor (262) are disposed spaced apart from each other in a left-right direction on the same side surface of the cleaning module (170).

4. The window cleaning apparatus of any one of claims 1 to 3, further comprising a control unit (1010) configured to detect the contamination of the window based on a measurement value of the first sensor (260).

5. The window cleaning apparatus of any one of claims 1 to 4, further comprising a control unit (1010) configured to classify a level of contamination of the window into one of a plurality of preset contamination levels based on a measurement value of the second sensor (262).

6. The window cleaning apparatus of claim 5, configured such that the level of contamination of the window is checked during an upward movement of the main body (100), and
the scraper (250) is brought into close contact with the window during a downward movement of the main body (100).

7. The window cleaning apparatus of claim 6, configured such that a cleaning liquid is sprayed and air is sprayed during the upward movement of the main body (100).

8. The window cleaning apparatus of any one of claims 1 to 7, wherein the cleaning module (170) further includes
an intake port (190) and a discharge port (192) formed on a front surface facing the window,
an outside air inlet (214) formed on a rear surface, and
a switching valve (218) configured to direct air introduced through the intake port (190) or the outside air inlet (214) to the discharge port (192), wherein
the switching valve (218) is configured to direct air introduced through the intake port (190) to the discharge port (192).

9. The window cleaning apparatus of claim 7, or of claim 8 when depending on claim 7, configured such that the spraying of the cleaning liquid and the spraying of the air are performed only during an initial upward movement.

10. The window cleaning apparatus of claim 6, or of any one of claims 7 to 9 when depending on claim 6, configured such that a or the cleaning liquid is sprayed and air is sprayed during the downward movement of the main body (100).

11. The window cleaning apparatus of claim 5, or of any one of claims 6 to 10 when depending on claim 5, configured such that a rotation speed of the fan (230) is determined according to the level of contamination.

12. The window cleaning apparatus of claim 5, or of any one of claims 6 to 11 when depending on claim 5, configured such that an amount of cleaning liquid to be sprayed is determined according to the level of contamination.

13. The window cleaning apparatus of claim 5, or of any one of claims 6 to 12 when depending on claim 5, further comprising a display (120) configured to display information on a level of contamination determined after completion of one cleaning operation.

14. The window cleaning apparatus of claim 5, or of any one of claims 6 to 13 when depending on claim 5, further comprising a communication unit (1060) configured to transmit information on a level of contamination determined after completion of one cleaning operation.

15. The window cleaning apparatus of any one of claims 1 to 14, further comprising a frame (11) movably mounted on a window frame, and
the main body (100) is movably mounted on the frame (11).
